# EUROPEAN PATENT SPECIFICATION

(11) **EP 1 422 646 B1**
(45) Date of publication and mention of the grant of the patent: **09.03.2011**
(21) Application number: 03026565.6
(22) Date of filing: 18.11.2003
(51) Int. Cl.: G06Q 20/00

(54) **System and Method for Electronic Purchase**
System und Verfahren zum elektronischen Erwerb
Système et procédé d'acquisition électronique

(30) Priority: 21.11.2002 JP 2002338558
(43) Date of publication of application: 26.05.2004
(73) Proprietor: NTT DoCoMo, Inc., Tokyo 100-6150 (JP)
(72) Inventor: Nakayama, Takehiro, Int.Prop.Dept.NTT DoCoMo,Inc., Tokyo 100-6150 (JP); Nakano, Hirotaka, Int.Prop.Dept.NTT DoCoMo,Inc., Tokyo 100-6150 (JP)
(74) Representative: Viering, Jentschura & Partner

(56) References cited:
- WO-A-01/41081
- US-A1- 2002 161 723

## Description

### BACKGROUND OF THE INVENTION

### Field of the Invention

The present invention relates to a communication terminal, a value entity providing server, an application delivery server, an electronic procurement supporting system, an electronic procurement supporting method, and an electronic procurement supporting program.

### Related Background Art

Along with the recent popularization of portable communication terminals such as cell phones (which will be referred to hereinafter as "portable terminals") and speeding-up of radio communication speeds, practical use has been achieved of information communication systems that permit the portable terminals to acquire desired content data from server apparatus through networks such as the Internet. In the electronic commerce utilizing such systems, entities of value are sometimes used as payment means without use of credit cards or cash.

A value entity is electronic data expressing (or substantiating) some economic value. The value entity is also called an electronic value and examples of such value entities include electronic money expressing monetary value (also called electronic currency, electronic circulation, and so on) , electronic tickets provided in the prepaid system, and so on. The electronic tickets express, for example, such values as book coupons, commutation tickets, railway tickets, and so on.

A proposed method of safely circulating such value entities is, for example, a technique of transferring a value entity filled (or charged) in a tamper-resistant IC (Integrated Circuit) card, by use of a dedicated card reader (e.g., cf. Nonpatent Document 1).

However, the IC cards are excellent in carryability and portability, while can pose the problems as described below, for example.
1. Since they have no user interface, the users cannot check the remainder of value entity unless they are connected to a separate display device.
2. Since no application can be mounted on them, they cannot graphically navigate for user's electronic procurement action.
3. Since they have no communication means, they cannot be refilled with an additional value entity unless they are connected to a separate communication device.

On the other hand, there are cell phones as portable terminals excellent in carryability and free of the above problems. The cell phones have such a user interface as a display unit or the like, and an application can be mounted on the cell phones. It is also feasible to refill the cell phones with a value entity from an external server apparatus through radio communication means.

In order for a cell phone to acquire an application, it is common practice to download the application through a cellular network. The cellular network is a public wireless network utilizing such an infrastructure as radio base stations operated by a telecommunications carrier. However, some of applications do not guarantee security and might harm the cell phones when downloaded and executed.

In order to clear up the above concern, a cellular network adopts such a technique as to restrict access of applications to a specific memory area in the cell phones and confine servers capable of communication through the use of applications to delivery sources thereof (e.g., cf. Nonpatent Document 2).

Another cellular network adopts such a scheme as to permit the users to download only applications created by parties certified as qualified creators, from Web sites (e.g., cf. Nonpatent Document 3).

US 2002/161723 A1 discloses a system for authorizing a mobile station to use a service provided by a service provider through the use of digital signatures.
[Nonpatent Document 1] "Information security technologies for foundation of electronic money, and security evaluations" IMES Discussion Paper Series 98-J-26, November 1998, INSTITUTE FOR MONETARY AND ECONOMIC STUDIES, BANK OF JAPAN
[Nonpatent Document 2] i-mode-compliant Java Contents Development Guides -Detail Edition- Version 1.1, May 14, 2001, NTTDoCoMo, Inc., http://www.nttdocomo.co.jp/p_s/imode/java/pdf/jguide010 514.pdf
[Nonpatent Document 3] J-PHONE Java Application Development Guides Version 1.1.5, Nov. 28, 2001, http://www.dp.j-phone.com/file/j_java_dg115.pdf

### SUMMARY OF THE INVENTION

In the above prior art, as described above, the applications to be circulated are limited to only those with security verified with some labor, or restrictions are imposed on correspondents of the portable terminals, in order to ensure the security of circulation of value entities through the cellular network. However, these techniques are predicated on the utilization of the cellular network, but are not prepared for use of applications acquired through ad hoc networks.

The cellular networks are sort of closed networks under the control of telecommunications carriers and have a high possibility of accurately authenticating correspondents. For this reason, communications utilizing the cellular networks are at low risk of intermediation of a third party and are thus relatively secure. In contrast to it, the ad hoc networks are sort of open networks which are temporarily established between portable terminals, independent of the specific infrastructure such as the base stations. Therefore, there is a possibility of risk if the applications acquired through the ad hoc networks are allowed to access the value entities charged in the portable terminals.

In view of the above problem, an object of the present invention is to safely and readily transmit and receive a value entity through the use of an application acquired through an ad hoc network.

In order to achieve the above object, a communication terminal according to the present invention comprises acquiring means for acquiring a value entity accompanied by a public key corresponding to a specific private key; receiving means for receiving an application electronically signed by the private key, throughanadhoc network; verifying means for verifying the application through the use of the public key; and transferring means for transferring the value entity through the use of the application when the verifying means successfully verifies the application.

A value entity providing server according to an example comprises providing means for providing a value entity accompanied by a public key corresponding to a specific private key, through a cellular network, for the communication terminal as set forth.

An application delivery server according to an example comprises application transmitting means for transmitting the application through the ad hoc network to the communication terminal as set forth; and value entity acquiring means for acquiring the value entity transferred by the transferring means of the communication terminal, through the ad hoc network.

An electronic procurement supporting system according to an example comprises the aforementioned communication terminal, the aforementioned value entity providing server, and the aforementioned application delivery server. The electronic procurement supporting system may be constructed in a configuration wherein the communication terminal acquires the value entity provided by the value entity providing server and transfers the value entity through the use of the application received from the application delivery server.

An electronic procurement supporting method according to the present invention comprises an acquiring step wherein a communication terminal makes acquiring means acquire a value entity accompanied by a public key corresponding to a specific private key; a receiving step wherein the communication terminal makes receiving means receive an applicationelectronicallysignedbytheprivatekey, through an ad hoc network; a verifying step wherein the communication terminal makes verifying means verify the application through the use of the public key; and a transferring step wherein, when the verifying means successfully verifies the application, the communication terminal makes transferring means transfer the value entity through the use of the application.

An electronic procurement supporting program according to the present invention is an electronic procurement supporting program which can be executed by a communication terminal, the electronic procurement supporting program letting the communication terminal substantialize: an acquiring function of acquiring a value entity accompanied by a public key corresponding to a specific private key; a receiving function of receiving an application electronically signed by the private key, through an ad hoc network; a verifying function of verifying the application through the use of the public key; and a transferring function of transferring the value entity through the use of the application when the application is successfully verified by the verifying function.

According to these aspects of the invention, the value entity providing server provides a value entity accompanied by a public key corresponding to a specific private key, for the communication terminal and the application delivery server transmits an application electronically signed by the private key, through the ad hoc network to the communication terminal. The application is verified through the use of the public key. When the verification is successfully done, the application is used to transfer at least part of the value entity in consideration of a service to the application delivery server. This makes it feasible to implement permission of access of the application to the value entity after the identity is confirmed between the provider of the value entity and the signatory to the application. Accordingly, it becomes feasible to safely and readily transmit and receive the value entity even through the use of the application acquired via the ad hoc network without intermediation of any telecommunications carrier.

The communication terminal according to the present invention may be configured so that the verifying means initiates the verification of the application in conjunction with an opportunity where the receiving means receives the application, and the communication terminal may further comprise starting means for starting the application in conjunction with an opportunity where the verifying means successfully verifies the application.

According to the present invention, the application is verified in conjunction with the opportunity of the reception thereof and is started in conjunction with an opportunity of the success in the verification. In this configuration, when the received application is a qualified one, the safe application is started without an instruction from the user of the communication terminal. Therefore, the user of the communication terminal becomes able to readily and quickly use the acquired application.

The communication terminal according to the present invention may further comprise deleting means for deleting the application in conjunction with an opportunity where a predetermined time has elapsed since a time when the receiving means received the application.

According to the present invention, the application is deleted in conjunction with the opportunity where the predetermined time has elapsed since the time of reception. In this configuration, the application is deleted without an instruction from the user of the communication terminal. Therefore, the user of the communication terminal is prevented from causing a confusion in the electronic commerce, for example, from erroneously applying the application to an electronic transaction unsuitable for the application (e.g., electronic transactions different in the contents of services). As a result, the reliability of electronic procurement support is maintained.

The communication terminal according to the present invention may further comprise deleting means for, where a communication with a sender of the application is disconnected after the reception of the application by the receiving means, deleting the application in conjunction with an opportunity where a predetermined time has elapsed.

According to the present invention, when the communication is disconnected between the communication terminal and the sender, the application is deleted in conjunction with the opportunity where the predetermined time has elapsed since the time of the disconnection of the communication. Namely, without an instruction from the user of the communication terminal, the application is deleted after a lapse of the predetermined time from the point where the communication was disconnected between the sender of the application (e.g., an application delivery server) and the communication terminal. In this configuration, the application is deleted in conjunction with leaving action of the user of the communication terminal from the environment where the application is used, which can surely prevent the application from being applied to inappropriate electronic transactions. Therefore, no confusion is caused in the electronic commerce. As a result, the reliability of electronic procurement support is maintained.

In the value entity providing server according to an example, the providing means may be configured to transmit the public key separately from the value entity to the communication terminal, prior to the provision of the value entity.
According to an example, the value entity is sent separately from the transmission of the public key from the value entity providing server to the communication terminal. Therefore, where the communication terminal is refilled with an additional value entity from the value entity providing server, there is no need for attaching the public key to the value entity, which can reduce the load of communication between the value entity providing server and the communication terminal.

In the value entity providing server according to an example, the public key may be posted on a server accessible from a plurality of terminals through the cellular network.
According to an example, the public key is posted on the server (e.g., the value entity providing server), independently of the value entity. This permits the communication terminal to access the server and acquire the public key only on the occasion of using the value entity. Therefore, the communication terminal does not always have to retain the public key and can save its memory capacity.

The value entity providing server according to an example may further comprise second verifying means for verifying integrity of the communication terminal before the providing means provides the value entity. According to an example, the integrity (sort of reliability of the communicationterminal), whichis an index indicating whether the communication terminal can normally operate as assumed or not, is verified prior to the provision of the value entity from the value entity providing server to the communication terminal. Therefore, it can circumvent the harms to the user of the communication terminal and the provider of the value entity, which can be caused by acquisition of the value entity at a low-reliability communication terminal.

The application delivery server according to an example may further comprise receipt transmitting means for, when the value entity acquiring means acquires the value entity, transmitting receipt data electronically expressing receipt of the value entity, via the ad hoc network to the communication terminal.

According to an example, the receipt data electronically expressing the receipt of the value entity at the application delivery server is transmitted from the application delivery server to the communication terminal through the ad hoc network. Therefore, when the user presents the receipt data received by the communication terminal, the application delivery server can readily confirm that the sender of the value entity is the above communication terminal. This makes it feasible to more securely prevent a commodity or a service in exchange for the value entity from being erroneously provided for a user of a different communication terminal (a communication terminal without transmission of any value entity).

The applicationdelivery server according to an example may further comprise third verifying means for verifying integrity of the communication terminal before the transmitting means transmits the application. According to an example, the integrity, which is an index indicating whether the communication terminal can normally operate as assumed, is verified prior to the provision of the application from the application delivery server to the communication terminal. Therefore, it is feasible to prevent the user of the communication terminal and the sender of the application from being harmed by acquisition of the application by a low-reliability communication terminal.

The present invention will become more fully understood from the detailed description given herein below and the accompanying drawings which are given by way of illustration only, and thus are not to be considered as limiting the present invention.
Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Fig. 1 is an illustration schematically showing the entire configuration of the electronic procurement supporting system.
Fig. 2 is an illustration showing the functional configuration of the electronic procurement supporting system in the first and second embodiments.
Fig. 3 is a block diagram showing the hardware configuration of the portable terminal.
Fig. 4 is a flowchart showing the flow of the electronic procurement processing executed by the electronic procurement supporting system in the first embodiment.
Fig. 5 is a diagram showing a data storage example of the value entity storage where plural types of value entities are stored.
Fig. 6 is an illustration showing an example of the commodity menu displayed on the display device of the portable terminal in execution of the electronic procurement processing.
Fig. 7 is a flowchart showing the flow of the electronic procurement processing executed by the electronic procurement supporting system in the second embodiment.
Fig. 8 is an illustration showing the functional configuration of the electronic procurement supporting system in the third embodiment.
Fig. 9 is a flowchart showing the flow of the electronic procurement processing executed by the electronic procurement supporting system in the third embodiment.
Fig. 10 is an illustration showing the functional configuration of the electronic procurement supporting system in a modification of the fourth embodiment.
Fig. 11 is an illustration showing the functional configuration of the electronic procurement supporting system in the fifth embodiment.
Fig. 12 is a flowchart showing the flow of the electronic procurement processing executed by the electronic procurement supporting system in the fifth embodiment.
Fig. 13 is an illustration showing the configuration of the electronic procurement supporting program according to the present invention.

### DESCRIPTION OF THE PREFERRED EMBODIMENTS

### First Embodiment

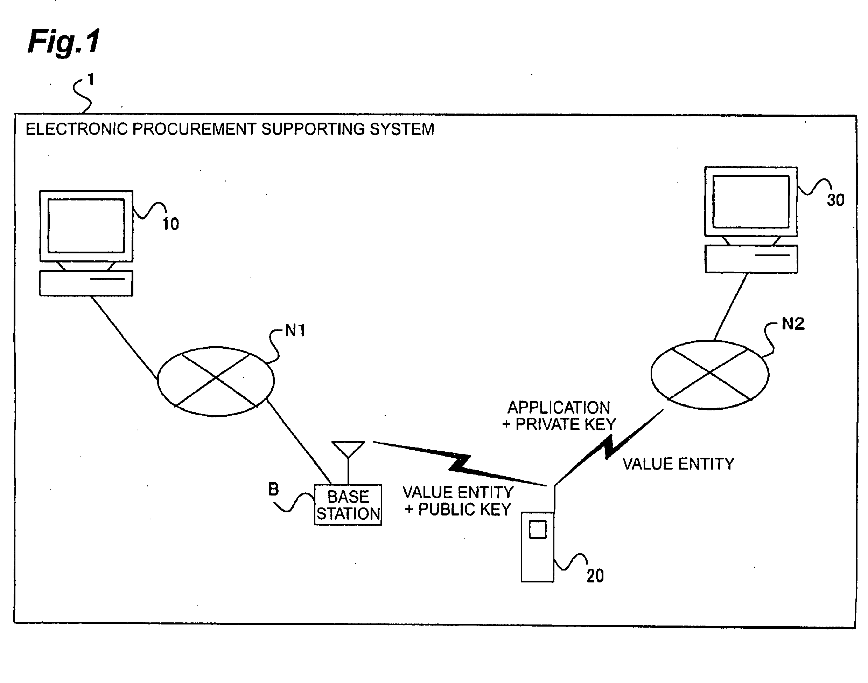

The electronic procurement supporting system according to the first embodiment of the present invention will be described below with reference to the accompanying drawings. First described is the configuration. Fig. 1 is a schematic illustration showing an example of the entire configuration of electronic procurement supporting system 1 in the present embodiment. As shown in Fig. 1, the electronic procurement supporting system 1 is comprised of value providing server 10 (corresponding to the value entity providing server), portable terminal 20 (corresponding to the communication terminal), and shop server 30 (corresponding to the application delivery server).

Furthermore, cellular network N1 is established between value providing server 10 and portable terminal 20, so that the portable terminal 20 can transmit and receive various data to and from the value providing server 10 via base station B and cellular network N1. The cellular network N1 is under the control of a telecommunications carrier and authentication of correspondent is carried out according to necessity in communications between users. For this reason, communications via the cellular network N1 are at low risk of unauthorized intermediation of a third party and can implement relatively safe transmission and reception of data.

Ad hoc network N2 is established between portable terminal 20 and shop server 30, so that the portable terminal 20 can wirelessly transmit and receive various data to and from the shop server 30 via the ad hoc network N2. The ad hoc network N2 is a network temporarily established between portable terminals, independently of a specific infrastructure. In the present embodiment, the ad hoc network N2 will be described as a communication network pursuant to the near field communication standards such as IEEE802.11b, Bluetooth, or the like, but, without having to be limited to it, the ad hoc network may be a communication network pursuant to the proximity radio communication standards, for example, such as IrDA (Infrared Data Association), ISO15693, ISO14443, and so on. Furthermore, it may be a wire communication network.

The ad hoc network N2 has such a characteristic that a communication area thereof is limited according to a reach of a radio wave transmitted from a terminal as a base. Therefore, it is easy to specify a location of a correspondent and the ad hoc network is suitable for delivery of an application program for electronic procurement support adaptive to the location of the portable terminal. Since the ad hoc network N2 can implement faster and cheaper communications than the cellular network N1, it is suitable for delivery of high volume of data like applications. On the other hand, since the ad hoc network is not under the control of any telecommunications carrier, there is an undeniable possibility of circulation of malicious or defective applications.

The value providing server 10 is a server apparatus which is operated by a payment service provider and which performs issuance and management (including provision with and without compensation) of a value entity usable in electronic procurement (trade of commodities and services through the use of the value entity electronically expressed). The value providing server 10 provides a value entity for the portable terminal 20 through the cellular network N1. The value providing server 10 may exist on an external network such as the Internet. In this case, the portable terminal 20 can access the value providing server 10 through a gateway operated by the telecommunications carrier and via cellular network N1. On this occasion, in terms of securing the security of communication, it is possible to perform cipher communication utilizing a predetermined secure protocol such as SSL (Secure Socket Layer) or the like.

The portable terminal 20 is adapted to a plurality of communication channels and is able to perform communications at least via the cellular network N1 and the ad hoc network N2 in the present embodiment. The portable terminal 20 acquires a value entity from the value providing server 10. The portable terminal 20 acquires an application for electronic procurement from the store server 30 and uses the application to achieve a support on purchase of a desired commodity or service for a charge of the value entity. The portable terminal 20 has a tamper-resistant data storage area (memory) and cryptographic processing performance.

The shop server 30 is operated by a shop where the electronic procurement is actually carried out, and provides an application for the electronic procurement, for the portable terminal 20. The shop server 30 acquires from the portable terminal 20 a value entity utilized for the electronic procurement, as a consideration of a commodity or service.

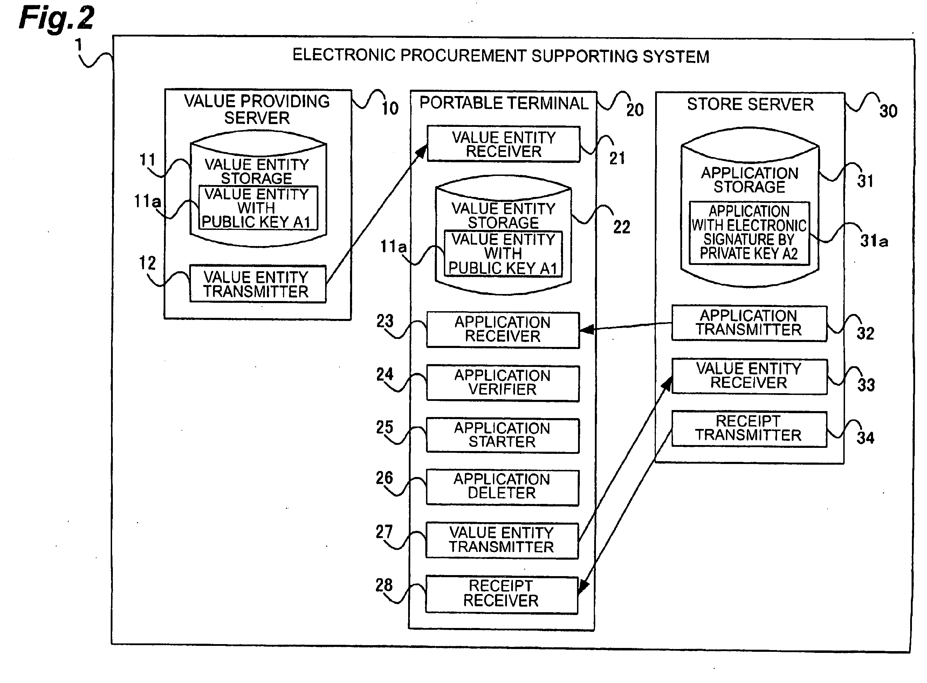

Fig. 2 is a system configuration diagram showing a functional configuration of electronic procurement supporting system 1 in the present embodiment. As shown in Fig. 2, the value providing server 10 functionally has value entity storage 11 and value entity transmitter 12 (corresponding to the providing means). The value entity storage 11 stores value entity 11a accompanied by public key A1 used in verification of the application. In response to a request from portable terminal 20, the value entity transmitter 12 retrieves the value entity 11a accompanied by the public key A1, from the value entity storage 11 and transmits the value entity to the portable terminal 20 through the cellular network N1 and base station B.

As shown in Fig. 2, portable terminal 20 functionally has value entity receiver 21 (corresponding to the acquiring means), value entity storage 22, application receiver 23 (corresponding to the receivingmeans), application verifier 24 (corresponding to the verifying means), application starter 25 (corresponding to the startingmeans) , application deleter 26 (corresponding to the deleting means), value entity transmitter 27 (corresponding to the transferring means), and receipt receiver 28.

The value entity receiver 21 receives the value entity 11a transmitted from the value providing server 10 and stores it with the public key A1 into the value entity storage 22.
The value entity storage 22 stores the value entity 11a received by the value entity receiver 21. The value entity storage 22 is preferably a tamper-resistant one in terms of securing the confidentiality of the value entity and the reliability of the system. There are well-known techniques about means for implementing the tamper resistance and, therefore, the detailed description thereof is omitted herein. However, conceivable methods are to construct the device of special materials, to properly interweave dummy wires, etc. (cf. Nonpatent Document 1 described before). The value entity storage 21 is constructed, for example, of a UIM (User Identity Module), an SIM (Subscriber Identity Module), or the like.
The application receiver 23 receives the application transmitted from the store server 30 and provided with an electronic signature.

In order to prevent the value entity from being misused by a malicious or defective application, the application verifier 24 verifies whether the application received by application receiver 23 is one with validity ensured. The verification is carried out based on whether the electronic signature on the received application is compliant to the public key A1 attached to the value entity 11a in the value entity storage 22. Specifically, the electronic signature is encrypted by the private key A2 and the application with the electronic signature cannot be decrypted by any other key than the public key A1 corresponding to the private key A2. Therefore, the portable terminal 20 is unable to execute the above application unless the public key A1 is one corresponding to the private key A2.

Furthermore, the application verifier 24 permits access to an application judged as one with validity ensured (one successfully verified) but rejects access to an application judged as one without validity (one failing in verification).

The application starter 25 starts an application successfully verified as a result of the verification by the application verifier 24.
The application deleter 26 deletes an application failing in verification as a result of the verification by the application verifier 24.

The value entity transmitter 27 is configured so that when an application is successfully verified and when the user of the portable terminal 20 gives an instruction to purchase a commodity or service, the value entity transmitter 27 transmits a value entity of an amount equivalent to a consideration thereof to the store server 30.
The receipt receiver 28 receives receipt data transmitted from the store server 30 and indicating receipt of the value entity.

As shown in Fig. 2, the store server 30 functionally has application storage 31, application transmitter 32 (corresponding to the application transmitting means), value entity receiver 33 (corresponding to the value entity acquiring means), and receipt transmitter 34 (corresponding to the receipt transmitting means).

The application storage 31 stores application 31a for enabling the electronic procurement at the store where the store server 30 is located. This application 31a is preliminarily provided with an electronic signature by a provider thereof and is offered with or without compensation. The application 31a is electronically signed by the private key A2 owned or managed by the payment service provider as an operator of the value providing server 10. The electronic signature certifies the provider of the application and ensures the validity of the application, and the attachment of this electronic signature permits the application 31a to use the value entity accompanied by the public key A1 corresponding to the private key A2.

The application transmitter 32 retrieves the application 31a from application storage 31 in response to a request from portable terminal 20 and transmits the application 31a to the portable terminal 20 through ad hoc network N2.
The value entity receiver 33 receives the value entity transmitted by the value entity transmitter 27 of portable terminal 20, through ad hoc network N2.
The receipt transmitter 34 is configured so that when the value entity receiver receives the value entity of the amount corresponding to a consideration of a provided commodity or service, it prepares and transmits receipt data indicating the receipt to portable terminal 20.

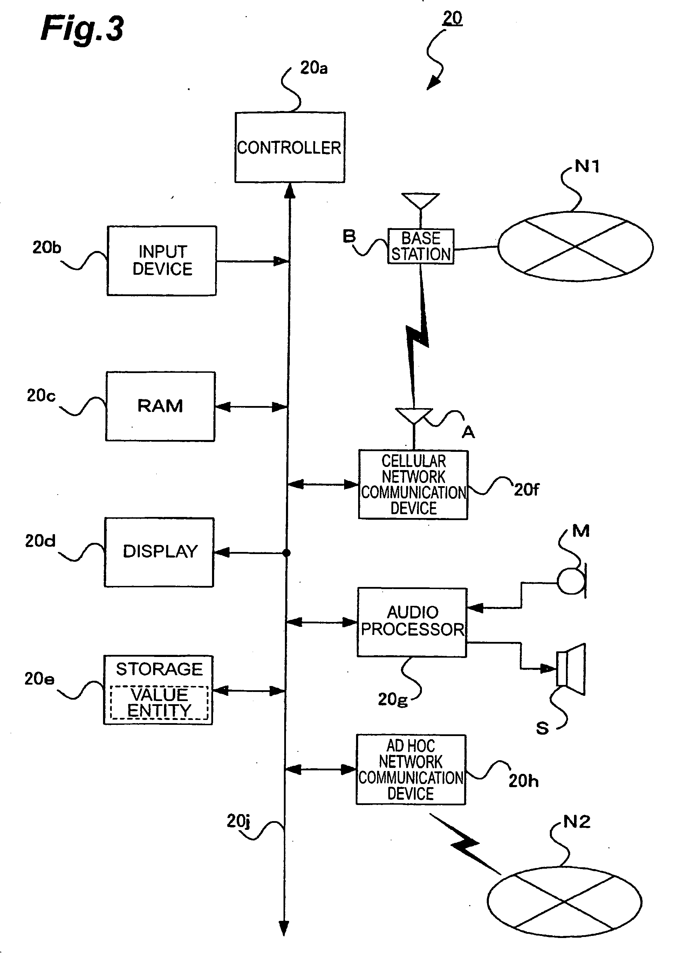

Since the portable terminal 20 is terminal equipment constituting the major part of the electronic procurement supporting system according to the present invention, the hardware configuration thereof will be described below in detail. Fig. 3 is a hardware configuration diagram of portable terminal 20. The portable terminal 20 is comprised of controller 20a, input device 20b, RAM 20c, display device 20d, storage device 20e, cellular network communication device 20f with telescopic antenna A, audio processor 20g, and ad hoc network communication device 20h. Each of these devices is electrically connected through bus 20j and they are able to send and receive signals to and from each other.

The controller 20a retrieves an electronic procurement supporting program stored in the storage device 20e, into RAM 20c and integrally controls each of the parts according to the program. Namely, the controller 20a executes various processes including the after-described electronic procurement process according to an input signal from input device 20b and the program retrieved into the RAM 20c and temporarily stores the result of the processing in the RAM 20c. Then the controller makes the processing result in the RAM 20c stored into a predetermined area inside the storage device 20e according to necessity.

The input device 20b is comprised of various operation buttons for giving a request for transmission of the value entity and application, and an instruction of selection, purchase, or the like of a commodity or service, and these various operation buttons are depressed singly or in combination to output an input signal according to the content of the instruction to the controller 20a.

The RAM (Random Access Memory )20c is constructed of a volatile semiconductor memory and temporarily stores a program or data retrieved from the storage device 20e described below, in the various processes executed by the controller 20a. The RAM 20c also has a function of VRAM (Video RAM) for temporarily storing data displayed on the display device 20d.

The display device 20d is constructed of an LCD (Liquid Crystal Display), an EL (Electro Luminescence) device, or the like, and is a user interface for displaying display data such as a commodity menu or the like in accordance with a display signal supplied from the controller 20a.

The storage device 20e is constructed of a nonvolatile semiconductor memory such as an EEPROM (Electrically Erasable and Programmable ROM) or the like, and stores data necessary for execution of various processes, data generated as a result of execution of the various processes, and so on. The storage device 20e stores the aforementioned value entity.

The cellular network communication device 20f performs control on radio communication with base station B. More specifically, the cellular network communication device 20f is a circuit consisting of a modem part (not shown) for executing modulation and demodulation of signals, and a codec part (not shown) for executing coding and decoding of signals, and has antenna A. The antenna A is provided in a telescopic manner in the upper part of the housing of portable terminal 20 and is used for transmission and reception of radio waves to and from the base station B.

The audio processor 20g is constructed of a converter, an amplifier, etc., and is equipped with microphone M and speaker S. The audio processor 20g operates during calls to convert audio data supplied from the controller 20a, into analog signals at the converter and emit sound through the amplifier from the speaker S. The audio processor 20g also operates during calls to convert audio signals from microphone M into digital signals at the converter and output them to the controller 20a.

The ad hoc network communication device 20h is pursuant to the near field communication standards such as IEEE802.11b or Bluetooth or the like, which are the standards of wireless LAN, and performs direct transmission and reception of data to and from the ad hoc network N2.

The operation of electronic procurement supporting system 1 in the present embodiment will be described below, together with each of steps constituting the electronic procurement supporting method according to the present invention.

In the present embodiment, the store where the electronic procurement process is executed is assumed to be, particularly, a chain of coffee shops, but it is noted that the present invention is by no means limited to the application at only such stores. In the present embodiment the chain of stores is a management organization form including shops dealing identical types of commodities or services under a unified business name and realizing the interests under the control of the same headquarters. The payment service provider playing a key role in the operation of value providing server 10 is under contract about sale of commodities or services with the headquarters. The headquarters may serve as the payment service provider.

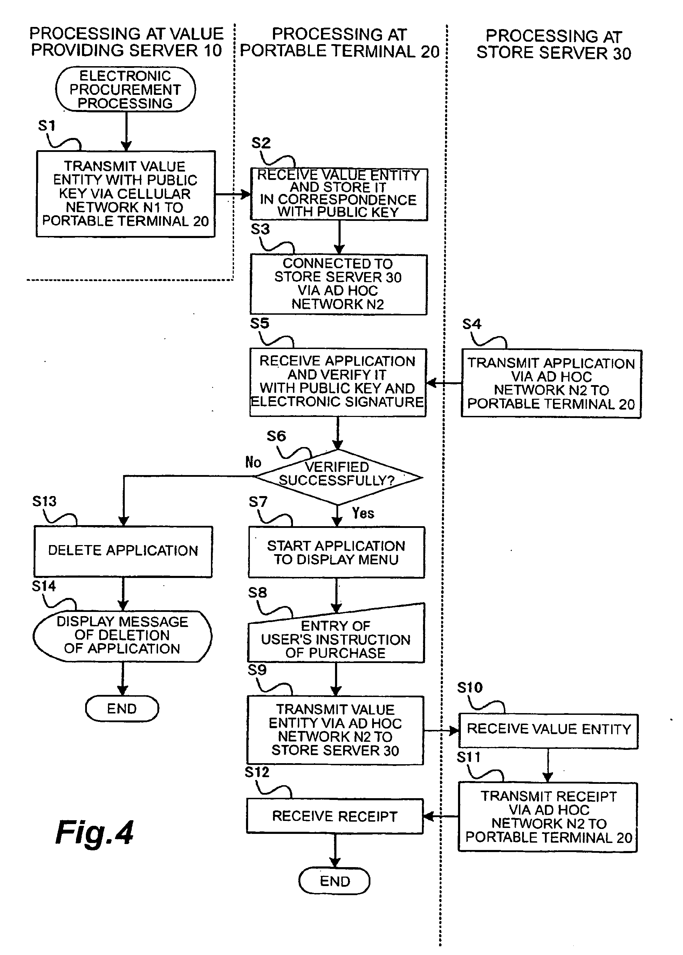

Fig. 4 is a flowchart showing the flow of the electronic procurement processing executed by the electronic procurement supporting system 1. Each of the steps described below is substantialized when the controller 20a executes the electronic procurement supporting program stored in the storage device 20e shown in Fig. 3.

First, the user of the portable terminal 20 purchases a value entity through a commercial transaction such as electronic settlement with a credit card, vicarious accounting by the telecommunications carrier, or the like. In conjunction with this operation, the value entity transmitter 12 of the value providing server 10 transmits the value entity 11a accompanied by the public key A1, to the portable terminal 20 via cellular network N1 and base stationB (S1). This transmissionprocess canbe implemented by the existing techniques of electronic commerce, and it is desirable to utilize authentication by a pre-registered password, or electronic authentication by a certificate authority, in order to prevent spoofing by a third party.

In order that an electronic procurement service to purchase a desired commodity with a consideration of the value entity 11a is definitely distinguished among various services provided in the electronic commerce, it is preferable to provide the value entity 11a with an identifier capable of uniquely identifying the service (which will be referred to hereinafter as a "service identifier") according to necessity. The service identifier is, for example, data of a combination of an IP address of the value providing server 10 with a character string not used before out of character strings generated by the value providing server 10, in order to avoid duplication with other services.

The service identifier is also held by an application which can use the value entity 11a. This identifier is, for example, included in a character string representing a file name of the application, or described in a meta-information description area explicitly allocated to the application. Accordingly, the portable terminal 20 is able to detect whether the service identified by the application agrees with the service for which the value entity 11a is used, prior to execution of the application.

At S2, the value entity 11a transmitted at S1 is received by the value entity receiver 21 of portable terminal 20 and is stored in correspondence with the service identifier into the value entity storage 22.

At S3, the portable terminal 20 is connected through ad hoc network N2 to the store server 30. Such connection is established by the ad hoc network communication device 20h, for example, when the portable terminal 20 is located within a communication area of a wireless LAN established by store server 30 in a coffee shop as a store. Since the communication area of the wireless LAN is normally at and near the site of the coffee shop, the communication via the ad hoc network becomes enabled between portable terminal 20 and store server 30 at the time when the user of portable terminal 20 enters the shop, at the latest.

At S4, the application transmitter 32 of store server 30 transmits the application 31a electronically signed by the private key A2, through ad hoc network N2 to the portable terminal 20. This transmission process may be push-type transmission in which the store server 30 forcibly transmits the application to every portable terminal including the portable terminal 20, or pull-type transmission in which the store server 30 transmits the application in response to an active transmission request from the portable terminal 20.

The application 31a transmitted at S4 is intended for support of purchase at the chain store, and the configuration thereof is individually selected according to marketing strategies specialized for the coffee shop where the store server 30 is located, and according to original service items or commodity types. The application 31a can be updated as occasion may demand. This enables effective procurement support adaptive to characteristics and temporal changes of the store.

At S5, the application 31a transmitted at S4 is received by the application receiver 23 of portable terminal 20 and the application verifier 24 verifies the validity thereof using the public key A1 and electronic signature.

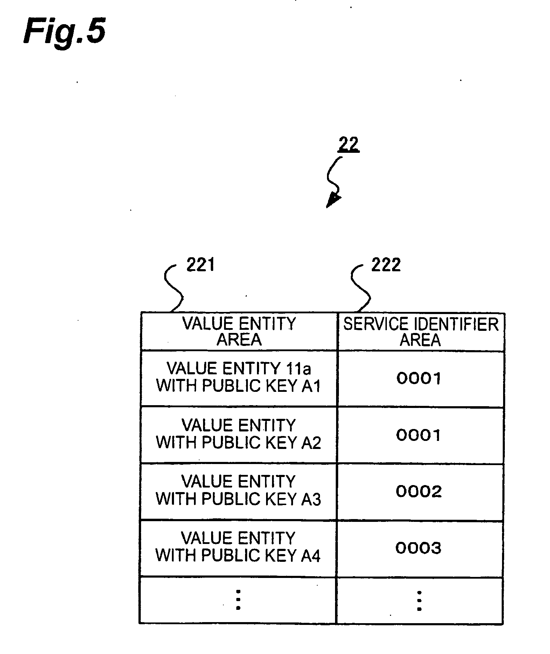

In the case where the value entity storage 22 stores plural types of value entities, it is effective to adopt a process of minimizing value entities as objects of verification, in terms of speeding-up of the verification process. This process can be implemented in such a way that the portable terminal 20 detects the aforementioned service identifier from the file name of the application or the like. The application verification process suitable for cases where plural types of value entities are stored will be described below with reference to Fig. 5.

Fig. 5 is a diagram showing a data storage example in the value entity storage 22 storing a plurality of value entities accompanied by mutually different public keys. As shown in Fig. 5, the value entity storage 22 comprises at least value entity area 221 and service identifier area 222. The value entity area 221 stores the value entities accompanied by their respective public keys A2, A3, and A4 different from the public key A1, in addition to the value entity 11a provided by the value providing server 10. The service identifier area 222 stores identifiers of services (e.g., "0001," "0002," "0003,"...) for which the corresponding value entities in the value entity area 221 are used.

Referringback to Fig. 4, at S5 the application verifier 24 collates the service identifier identifiedby the received application, with the service identifiers in the service identifier area 222. When the collation results in detecting no service identifier agreeing with the service identifier of the application, the verification of the application ends in failure at that point and the flow shifts to the processing at and after S13 described later.

On the other hand, when the above collation results in detecting a service identifier agreeing with the service identifier of the application, there is a possibility that the application is valid, and there also remains a possibility that a plurality of value entities with the same service identifier are detected, or a possibility that the electronic signature of the application is not compliant to the public key of the value entity.

Therefore, the application verifier 24 further performs the verification of the electronic signature of the received application, using the public key attached to each value entity with the agreeing service identifier. Namely, the application verifier 24 verifies whether the application is one electronically signed by the payment service provider as a provider of the value entity and whether ornot it is falsified. This verification canbe implemented, for example, by public-key cryptography. The verification process of the application may be one automatically executed in conjunction with the opportunity of the reception of the application or one executed in response to a user's instruction from input device 20b.

Where only one value entity is stored in the value entity storage 22, only the verification process of the electronic signature can be carried out without execution of the collation process of the service identifier.
As a result, the verification is successfully conducted of the value entity provided with "0001" being the service identifier of the application 31a and accompanied by the public key A1 corresponding to the private key A2, i.e., of the value entity 11a.

When the verification at S5 results in confirming that the electronic signature of the application is made by the provider of the value entity and that the application is not falsified, the application verifier 24 determines that the application is successfully verified (S6; Yes), and instructs the application starter 25 to start the application.

At S7 the application received at S5 is started by the application starter 26. The application 31a thus started becomes accessible to the value entity 11a received and stored at S2. With the start of application 31a, a menu list of commodities or services available to the user of the portable terminal 20 is displayed on the display device 20d and the controller 20a awaits a user's instruction of purchase from the input device 20b. The instruction of purchase includes designation of identification information of a commodity or service for the user to desire to purchase, and also includes designation of the number thereof.

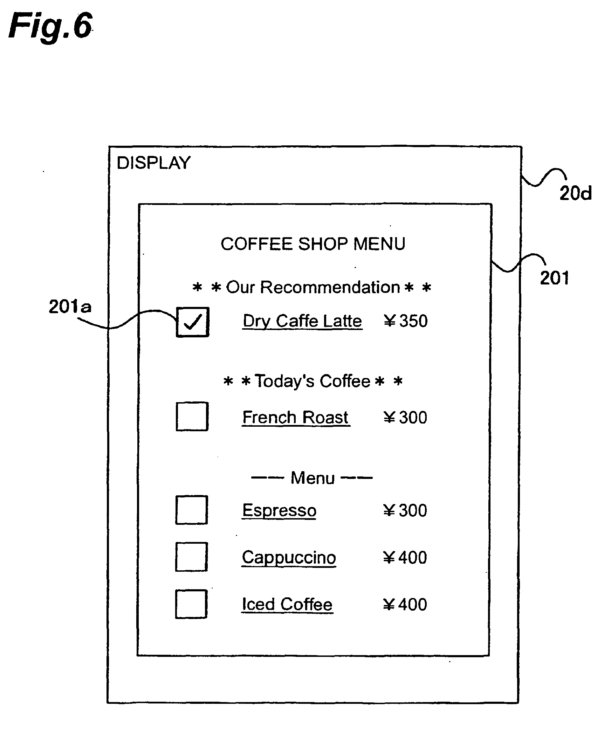

For example, supposing the store is a chain store as described above, coffee shop menu 201 shown in Fig. 6 is displayed on the display device 20d. As shown in Fig. 6, the coffee shop menu 201 presents a list of types of coffees as names of commodities along with their prices. The user checks a check box 201a located to the left corresponding to a name of a desired commodity (Dry Caffe Latte) through the input device 20b to select a coffee as an object of purchase. It is also possible to employ a scheme wherein the number of desired coffee is entered into the check box 201a. The display may also be arranged so that, after the selection of the purchasing object, the display device 20d displays a message for the user to confirm the commodity name and number.

More specifically, in the coffee shop menu 201, "Dry Caffe Latte," which the coffee shop originally promotes, is displayed as "Our recommendation" at a position easy to attract user's attention (an area near to the head part of the menu). In this way, the electronic procurement supporting system 1 enables each of coffee shops under the control of the aforementioned headquarters to provide the electronic procurement support based on its original marketing strategy and location. Particularly, in the case of a nationwide expanding chain of stores, user's tastes and climate conditions vary among regions, and thus electronic procurement supports differing among coffee shops are effective in terms of improvement of convenience and promotion of sale. Furthermore, changes of commodity names displayed as"Today's coffee"at appropriate intervals (e.g., every day) are also effective in a sense of promptly adjusting to changes of user's needs.

Returning to Fig. 4, when the purchase instruction is entered (S8) , the value entity transmitter 27 of the portable terminal 20 subtracts a value entity of an amount equivalent to a charge of the commodity or service designated to purchase (350 yen in the above example) from the value entity 11a in the value entity storage 22, and the value entity is transmitted via ad hoc network N2 to the store server 30 (S9). This transmission process can be implemented by the existing electronic money transmission/reception technologies, for example, as described in Document ("Information Security Technologies," August 2000, publishedby THE TELECOMMUNICATIONS ASSOCIATION, supervised by Seiichi Ido, and edited by Takaaki Matsumoto and Tatsuaki Okamoto).

If the value entity equivalent to the charge of the commodity or service is greater than the value entity 11a, the value entity transmitter 27 makes the display device 20d display a message of insufficient funds, without performing the subtraction and transmission of the value entity. A value entity of a shortfall may be compensated for by a post-payment (later payment) method.

At S10, the value entity transmitted from the portable terminal 20 is received by the value entity receiver 33 of the store server 30.
At S11, the receipt transmitter 34 of store server 30 transmits data electronically expressing the receipt of the value entity equivalent to the charge of the commodity or service (receipt data) through ad hoc network N2 to the portable terminal 20.

At S12, the receipt receiver 28 of portable terminal 20 receives the receipt data transmitted from the store server 30. The application 31a converts the received receipt data into a renderable format and it is displayed on the display device 20d. In order to facilitate identification of an issuer of the receipt and prevent forgery, a background color selected by the coffee shop may be used in the receipt data or a predetermined icon (pictorial symbol) may be inserted therein. In order to prevent double use of the receipt, the background color or icon may be altered at predetermined time intervals. Furthermore, the receipt data may be given a time stamp indicating a date of issue.

The coffee shop requests the user of the portable terminal 20 as a purchaser to display the receipt data on the display device 20d and, after the validity of the receipt data is confirmed, the coffee shop provides the commodity (Dry Caffe Latte in the above example) for the user.

The receipt does not always have to be limited to those transmitted and received between terminals. Namely, of course, it is also possible to employ such a configuration that when the value entity is received at S10, a shop attendant at the shop acknowledging it prints out a physical (paper medium) receipt expressing the receipt of the charge equivalent to the value entity, and hands it to the user.

When the verification at S5 results in acknowledging that the electronic signature of the application is not one provided by the provider of the value entity or that the application is falsified, the application verifier 24 determines that the application failed in verification (S6; No) , and instructs the application deleter 26 to delete the application.

At S13, the application received at S5 is deleted by the application deleter 26. In the ad hoc networks including the wireless LANs, direct communications are carried out between terminal devices without intermediation of any telecommunications carrier, and it is thus envisaged that the communication content is intercepted or that third parties except for the coffee shop provide other services by wireless LANs in the neighboring areas. By deleting the application, however, it is feasible to avoid various harms that can be caused by execution of the application made by a malicious third party or possibly falsified. As a result, it is feasible to secure the high security level for the electronic procurement supporting system 1.

At S14, the display device 20d displays a message indicating that the application received at S5 was deleted. The message is, for example, text data of "The downloaded application failed in verification. Consequently, the application was deleted." For this reason, the user of portable terminal 20 readily acknowledges that the application failed in verification and that the application was deleted. The application deleting process may be arranged to be executed in response to a user's instruction from the input device 20b.

As described above, the electronic procurement supporting system 1 in the first embodiment is configured to verify whether the access of the application to the value entity acquired in advance from the value providing server 10 should be permitted, taking into account the concern that the application transmitted from the store server 30 is not always safe. The means for performing this verification is one to determine whether the creator of the public key preliminarily attached to the value entity agrees with the creator of the private key used for the electronic signature of the application. The portable terminal 20 permits the access of the application to the value entity only in the case of the success in verification, and transfers the value entity to the store server 30 through the use of the application.

This makes it feasible to prevent the access of an application of an uncertified provider or a falsified application to the value entity and thus prevent misuse of the value entity. As a result, the safe and easy electronic procurement support is also implemented under circumstances where the value entity is transmitted and received through the use of the ad hoc networks.

### Second Embodiment

The second embodiment of the present invention will be described below.
In the first embodiment the value entitywas transmitted together with the corresponding public key from the value providing server 10 to the portable terminal 20, whereas in the present embodiment the value entity and the public key are transmitted independently of each other.

The electronic procurement supporting system in the present embodiment has much the same functional configuration as the electronic procurement supporting system 1 detailed in the first embodiment. The portable terminal in the present embodiment also has the same hardware configuration as the aforementioned portable terminal 20. Therefore, the common components will be denoted by the same reference symbols, without the description thereof, and only differences from the first embodiment will be detailed below.

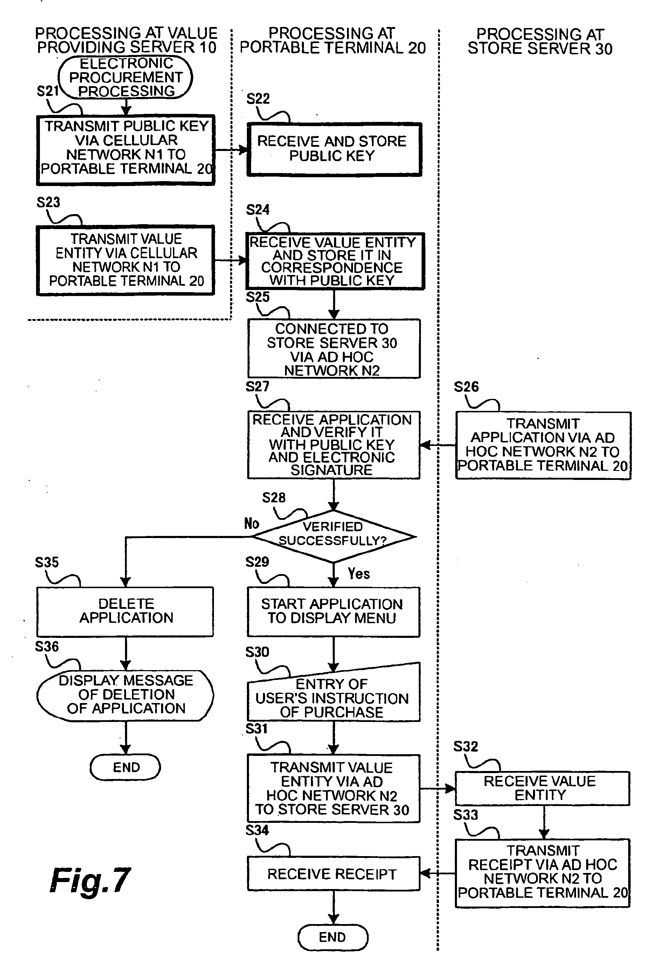

The electronic procurement processing executed by the electronic procurement supporting system in the second embodiment will be described below with reference to Fig. 7.
The electronic procurement processing in the present embodiment includes the steps common to the electronic procurement processing detailed in the first embodiment (cf. Fig. 4). Specifically, the steps of S25-S36 in Fig. 7 are equivalent to those of S3-S14 shown in Fig. 4.

The following will describe S21-S24 (processes in heavy-line blocks in Fig. 7), which are specific steps in the present embodiment. First, at S21 the user of the portable terminal 20 completes an agreement about trade of commodities or services with a payment service provider or acquires an account with the provider, whereby the value entity transmitter 12 of the value providing server 10 transmits the public key A1 via cellular network N1 and base station B to the portable terminal 20.

At S22, the public key A1 transmitted at S21 is received by the value entity receiver 21 of portable terminal 20 to be stored in the value entity storage 22. In a potential configuration, the public key A1 may be preliminarily stored in the storage device 20e at the time of production of the portable terminal 20.

At S23, the user of the portable terminal 20 purchases a value entity through a commercial transaction such as electronic settlement with a credit card, vicarious accounting by the telecommunications carrier, or the like. In conjunction therewith, the value entity transmitter 12 of the value providing server 10 transmits the value entity 11a corresponding to the public key A1 via cellular network N1 and base station B to portable terminal 20.

At S24, the value entity 11a transmitted at S23 is received by the value entity receiver 21 of portable terminal 20 and is stored in correspondence with the public key A1 and service identifier into the value entity storage 22.
Thereafter, the processes at and after S25 are executed, and the steps of S25-S36 are the same as those of S3-S14 in the first embodiment (cf. Fig. 4). Therefore, the description thereof is omitted herein.

In the electronic procurement supporting system in the second embodiment, the portable terminal 20 can be refilled (or charged) with an additional value entity, by repeatedly executing the processes of S23 and S24. Namely, when there remains some value entity in the value entity storage 22 at the time of the reception of an additional value entity at the portable terminal 20, the amount of the received value entity is added (merged) to the amount of the remaining value entity. On this occasion, the value providing server 10 does not have to attach the public key to the value entity transmitted, and it is thus feasible to decrease the volume of data transmitted in conjunction with the electronic procurement processing.

### Third Embodiment

The third embodiment of the present invention will be described below.
In the first and second embodiments, the portable terminal 20 was configured to store the public key preliminarily acquired from the value providing server 10, together with the corresponding value entity in the value entity storage 22, and always retain it. In contrast to it, in the present embodiment the portable terminal 20 is configured to request the value providing server 10 to transmit the public key on every occasion of electronic purchase using the application, and thereby acquire the public key.

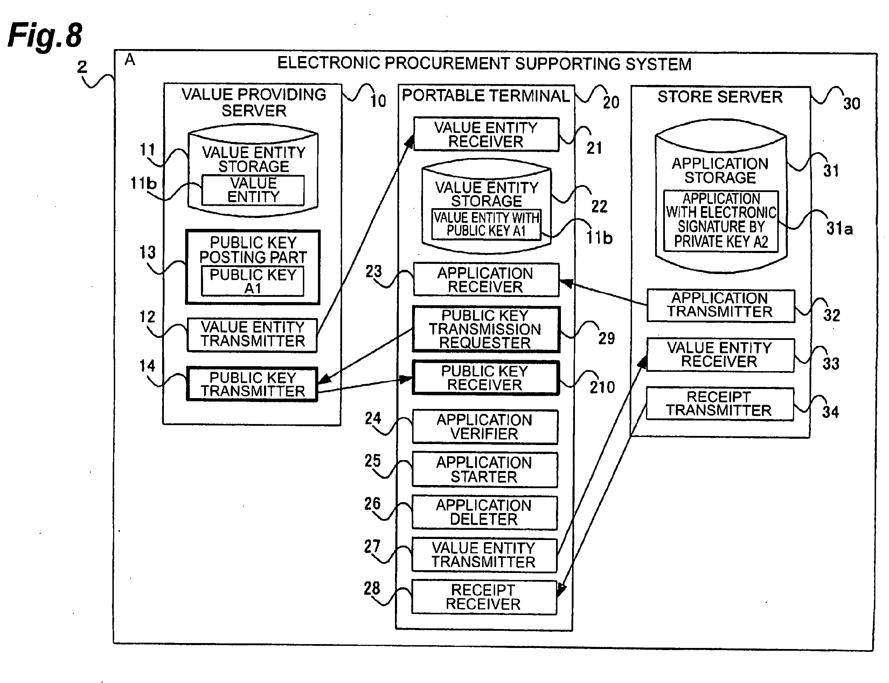

Fig. 8 is a system configuration diagram showing the functional configuration of electronic procurement supporting system 2 in the present embodiment. The electronic procurement supporting system 2 includes a plurality of components functionally common to the electronic procurement supporting system 1 in the first and second embodiments. The portable terminal in the present embodiment has the same hardware configuration as the aforementioned portable terminal 20. Therefore, the common components will be denoted by the same reference symbols, without description thereof, and only differences from each of the above embodiments will be detailed below.

As shown in Fig. 8, the value providing server 10 functionally has value entity storage 11, public key posting part 13, value entity transmitter 12, and public key transmitter 14.
The value entity storage 11 stores value entity 11b used for electronic purchase of a commodity or service at a store.
The public key posting part 13 updatably retains public key A1 necessary for starting of application 31a. The public key posting part 13 posts the public key A1 in an accessible form from a plurality of portable terminals including the portable terminal 20, via cellular network N1.

The value entity transmitter 12 retrieves the value entity 11b from the value entity storage 11 in response to a value entity transmission request from the portable terminal 20 and transmits it through the cellular network N1 and base station B to the portable terminal 20.
The public key transmitter 14 acquires the public key A1 from the public key posting part 13 in accordance with a public key transmission request from the portable terminal 20 and transmits it through the cellular network N1 and base station B to the portable terminal 20.

As shown in Fig. 8, the portable terminal 20 functionally has value entity receiver 21, value entity storage 22, application receiver 23, public key transmission requester 29, public key receiver 210, application verifier 24, application starter 25, application deleter 26, value entity transmitter 27, and receipt receiver 28.

The public key transmission requester 29 requests the value providing server 10 to transmit the public key necessary for starting of application 31a (public key A1), in conjunction with reception of the application 31a at application receiver 23.
The public key receiver 210 receives the public key A1 transmitted by the public key transmitter 14 of value providing server 10 and instructs the application verifier 24 to verify the application 31a through the use of the public key A1.

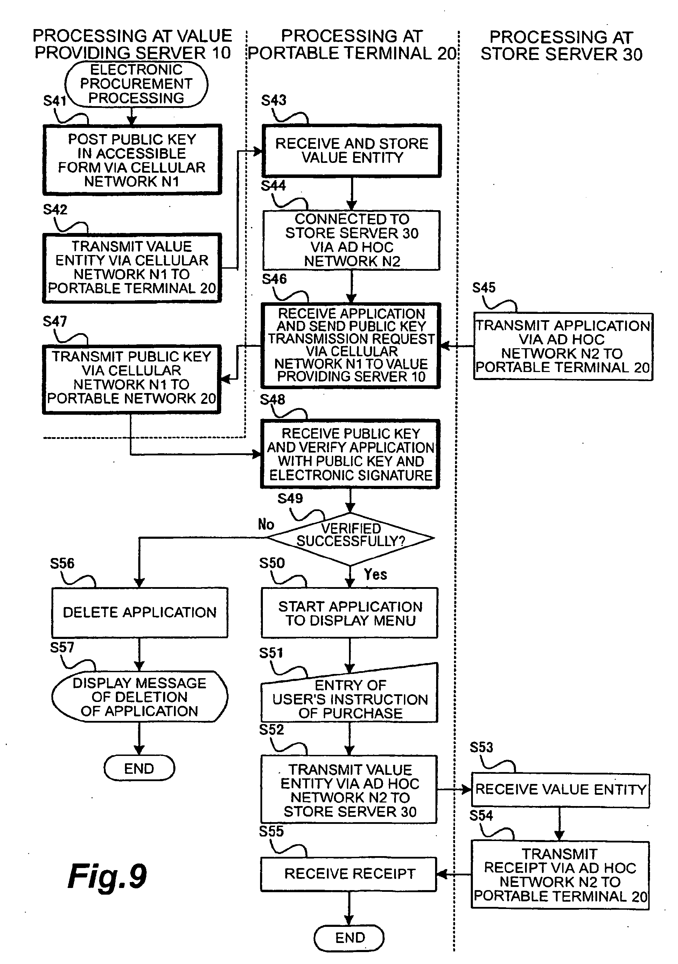

The electronic procurement processing executed by the electronic procurement supporting system in the third embodiment will be described below with reference to Fig. 9.
The electronic procurement processing in the present embodiment includes a plurality of steps common to the electronic procurement processing (cf. Fig. 4) detailed in the first embodiment. Specifically, the steps of S44, S45, and S49-S57 in Fig. 9 are equivalent to those of S3, S4, and S6-S14 shown in Fig. 4.

S41-S43, S46, and S47 (processes in heavy-line blocks in Fig. 9) , which are specific steps in the present embodiment, will be describedbelow. First, at S41 the public key posting part 13 of value providing server 10 posts the public key A1 in an accessible form from portable terminal 20 through cellular network N1.

At S42, the user of portable terminal 20 purchases a value entity through a commercial transaction such as the electronic settlement with a credit card, the vicarious accounting by the telecommunications carrier, or the like. In conjunction therewith, the value entity transmitter 12 of value providing server 10 transmits the value entity 11a corresponding to the public key A1 via cellular network N1 and base station B to the portable terminal 20.

At S43, the value entity 11a transmitted at S42 is received by the value entity receiver 21 of portable terminal 20 and is stored in correspondence with the service identifier in the value entity storage 22. At this point, the public key A1 does not exist in the portable terminal 20.

When the portable terminal 20 is connected through ad hoc network N2 to store server 30 (S44), the store server 30 transmits the application 31a via ad hoc network N2 to portable terminal 20 (S45).
At S46, the public key transmission requester 29 sends a transmission request for transmission of the public key A1 necessary for starting of the application 31a, to the value providing server 10 in conjunction with the opportunity of the reception of application 31a. This transmission request is transmitted through cellular network N1 with higher confidentiality and security.

At S47, the public key transmitter 14 acquires the public key A1 from the public key posting part 13 in response to the public key transmission request transmitted at S46, and transmits the public key A1 via cellular network N1 to portable terminal 20.

The public key A1 transmitted at S47 is received by public key receiver 210 of portable terminal 20 (S48). In conjunction with the reception of the public key A1, the portable terminal 20 makes the application verifier 24 start the verification of application 31a received at S46. Thereafter, the processes at and after S49 are executed, and the steps of S49-S57 are the same as those of S6-S14 (cf. Fig. 4) in the first embodiment. Therefore, the description thereof is omitted herein.

In the electronic procurement supporting system 2 in the third embodiment, the payment service provider posts the public key A1 on the value providing server 10, whereby the portable terminal 20 can acquire the public key A1 from the value providing server 10 as occasion demands, without need for always retaining the public key A1. Therefore, it is feasible to save the storage capacity of data in the portable terminal 20.

Proper update of private key A2 contributes to improvement in security of the electronic procurement support, but it is difficult to update the public key A1 retained by the portable terminal 20, without a delay behind the update of the private key A2. In the electronic procurement supporting system 2, therefore, the portable terminal 20 actively acquires the public key A1 on every occasion of reception of application 31a. This permits the user of portable terminal 20 to securely and readily obtain the public key A1 corresponding to the latest private key A2 even after update of the private keyA2. As a consequence, the electronic procurement supporting system 2 can provide easy electronic procurement while maintaining the high security.

### Fourth Embodiment

The fourth embodiment of the present invention will be described below.
In the first to third embodiments the portable terminal 20 was configured to delete the application if the received application failed in verification. In contrast to it, in the present embodiment the portable terminal 20 is configured to automatically delete the application in conjunction with an opportunity where a predetermined time has elapsed since the time of reception of the application. The following will describe a typical example of electronic procurement supporting system 3 constructed by adding an elapsed time measuring function to the electronic procurement supporting system 1 in the first embodiment, and it is also noted that this function can also be applied to the electronic procurement supporting systems in the second and third embodiments.

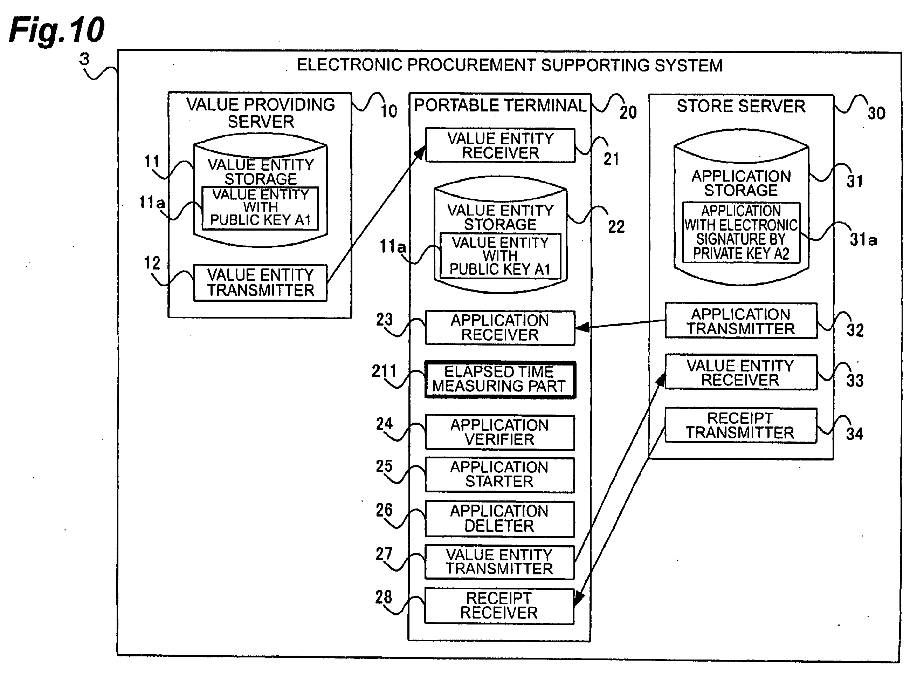

Fig. 10 is a system configuration diagram showing the functional configuration of electronic procurement supporting system 3 in the present embodiment. The electronic procurement supporting system 3 includes a plurality of components functionally common to the electronic procurement supporting system 1 in the first embodiment. The portable terminal in the present embodiment also has the same hardware configuration as the aforementioned portable terminal 20. Therefore, the common components will be denotedby the same reference symbols, without description thereof, and only differences from the first embodiment will be detailed below.

A predetermined time T1 arbitrarily set by the store (e.g., approximately one to three hours) is preliminarily described in the application 31a transmitted from the store server 30 to the portable terminal 20.
As shown in Fig. 10, the portable terminal 20 functionally has value entity receiver 21, value entity storage 22, application receiver 23, elapsed time measuring part 211, application verifier 24, application starter 25, application deleter 26, value entity transmitter 27, and receipt receiver 28.

The elapsed time measuring part 211 starts measurement of elapsed time at the time when the application receiver 23 receives the application 31a. At the same time, the elapsed time measuring part 211 acquires the predetermined time T1 from the application 31a and awaits arrival of the elapsed time at the predetermined time T1. In conjunction with the opportunity where the above elapsed time arrives at the predetermined time T1, the elapsed time measuring part 211 instructs the application deleter 26 to delete the application 31a.

The application deleter 26 deletes the application 31a in accordance with the instruction from the elapsed time measuring part 211. If there is a file created by the application 31a, the application deleter 26 also deletes it. The file is, for example, receipt data converted in a renderable format.

The electronic procurement supporting system 3 in the fourth embodiment is configured to automatically delete the application 31 in conjunction with the lapse of the predetermined time from the point of the reception thereof at portable terminal 20. For this reason, the application 31a will never stay in the portable terminal 20 over the predetermined time. Therefore, it is feasible to circumvent the fear that the application 31a or the file created thereby is used at another store to cause a confusion in the electronic commerce.

Furthermore, a modification of the fourth embodiment may be such that the portable terminal 20 continues a communication session with the store server 30 even after the reception of application 31a and the elapsed time measuring part 211 starts the measurement of elapsed time at the time of disconnection of the communication session. In this case, the elapsed time measuring part 211 acquires a predetermined time T2 (e.g., approximately five minutes) from the application 31a at the same time as the start of measurement and awaits arrival of the above elapsed time at the predetermined time T2. In conjunction with an opportunity where the above elapsed time arrives at the predetermined time T2, the elapsed time measuring part 211 instructs the application deleter 26 to delete the application 31a.

The application deleter 26 deletes the application 31a in accordance with the instruction from the elapsed time measuring part 211. If there is a file created by the application 31a, the application deleter 26 also deletes it. The file is, for example, receipt data converted in the renderable format.

A disconnection of a communication session is caused by an external factor such as departure of the portable terminal 20 from in the communication area of ad hoc network N2. In the electronic procurement supporting system in the present modification, the application 31a is deleted in conjunction with the opportunity of the disconnection of the communication session. In other words, the period of time to retain the application 31a is dependent upon the duration of the communication session, and the application is promptly and securely deleted from the portable terminal 20 because of withdrawal of the user of portable terminal 20 from the store. Accordingly, it is feasible to eliminate the concern that the application 31a is used at another store to cause a confusion in the electronic commerce.

In some communication environments there is a possibility that communication is disconnected for some reason after completion of reception and before completion of verification of the application 31a and the application 31a not passing the verification process remains in the portable terminal 20. In such cases, therefore, the application deleter 26 automatically deletes the application 31a after a lapse of the predetermined time, whereby it is feasible to prevent the application with no guarantee of validity from being held in the portable terminal 20. The predetermined time is desirably a sufficiently short period of time (e.g., approximately one to three seconds) in terms of avoiding a case in which the application is used for transfer of a value entity immediately after reception of the application 31a.

### Fifth Embodiment

The fifth embodiment of the present invention will be described below.
In the present embodiment, the portable terminal has a function of measuring integrity which is an index indicating whether the potable terminal can normally operate as expected. The value providing server verifies the result of the measurement transmitted from the portable terminal and transmits the value entity to the portable terminal only if the verification is successful. Similarly, the store server sends the application to the portable terminal only if the above measurement result is successfully verified.

The following will describe a typical example of electronic procurement supporting system 4 constructed by adding the integrity measuring function to the portable terminal 20 in the electronic procurement supporting system 1 in the first embodiment, and it is noted that this function can also be applied to the electronic procurement supporting systems in the second to fourth embodiments.

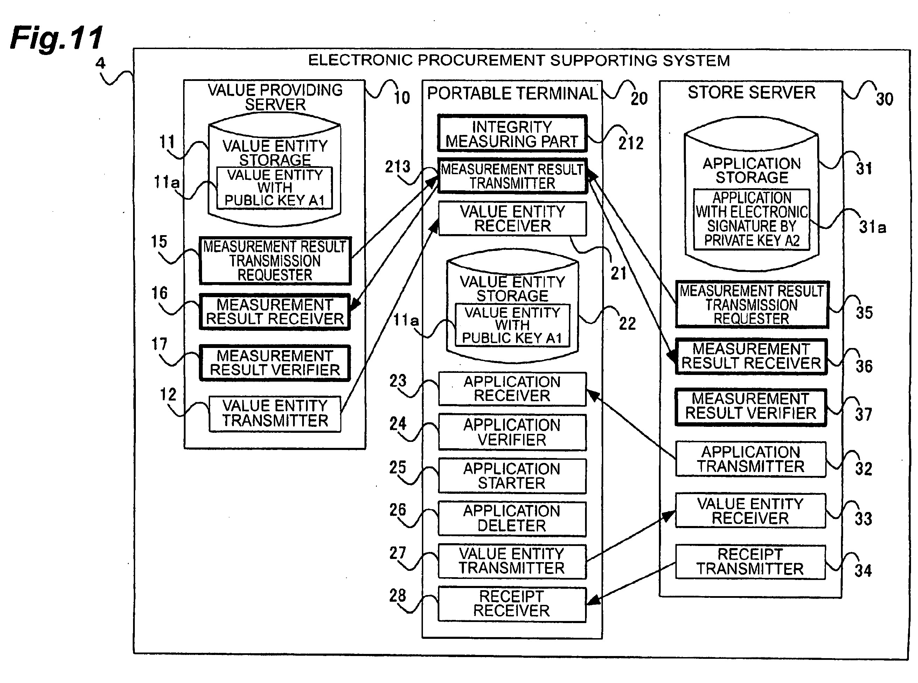

Fig. 11 is a system configuration diagram showing the functional configuration of electronic procurement supporting system 4 in the present embodiment. The electronic procurement supporting system 4 includes a plurality of components functionally common to the electronic procurement supporting system 1 in the first embodiment. The portable terminal in the present embodiment also has the same hardware configuration as the aforementioned portable terminal 20. Therefore, the common components will be denoted by the same reference symbols, without description thereof, and only differences from the first embodiment will be detailed below.

As shown in Fig. 11, the value providing server 10 functionally has value entity storage 11, measurement result transmission requester 15, measurement result receiver 16, measurement result verifier 17 (corresponding to the second verifying means), and value entity transmitter 12. The measurement result transmission requester 16 requests the portable terminal 20 to transmit the measurement result of integrity. The measurement result receiver 16 receives the measurement result transmitted by the measurement result transmitter 213 of portable terminal 20, through cellular network N1.

The measurement result verifier 17 verifies the above measurement result received by the measurement result receiver 16 to evaluate the reliability of the portable terminal 20. The process of verifying the integrity measurement result can be implemented by the existing techniques, for example, as described in the document (Compaq Computer Corporation, Hewlett-Packard Company, IBM Corporation, Intel Corporation, Microsoft Corporation, "Trusted Computing Platform Alliance (TCPA) Main Specification Version 1.1b," 22 February 2002, http://www.trustedcomputing.org/docs/main%20v1_1b.pdf).

The portable terminal 20 functionally has integrity measuringpart 212, measurement result transmitter 213, value entity receiver 21, value entity storage 22, application receiver 23, application verifier 24, application starter 25, application deleter 26, value entity transmitter 27, and receipt receiver 28.

The integrity measuring part 212 has the function substantialized as the TPM (Trusted Platform Module) of the existing technology is executed by the controller 20a of portable terminal 20, and measures the integrity of portable terminal 20. The measurement process of integrity can also be implemented, for example, by the techniques described in the above document.

The measurement result transmitter 213 transmits the integrity measurement result by the integrity measuring part 212 to the value providing server 10.

The store server 30 functionally has application storage 31, measurement result transmission requester 35, measurement result receiver 36, measurement result verifier 37 (corresponding to the third verifying means), application transmitter 32, value entity receiver 33, and receipt transmitter 34. The measurement result transmission requester 35 requests the portable terminal 20 to transmit the result of measurement of integrity. The measurement result receiver 36 receives the above measurement result transmitted by the measurement result transmitter 213 of portable terminal 20, via the ad hoc network N2. The measurement result verifier 37 verifies the above measurement result received by the measurement result receiver 36 to evaluate the reliability of portable terminal 20.

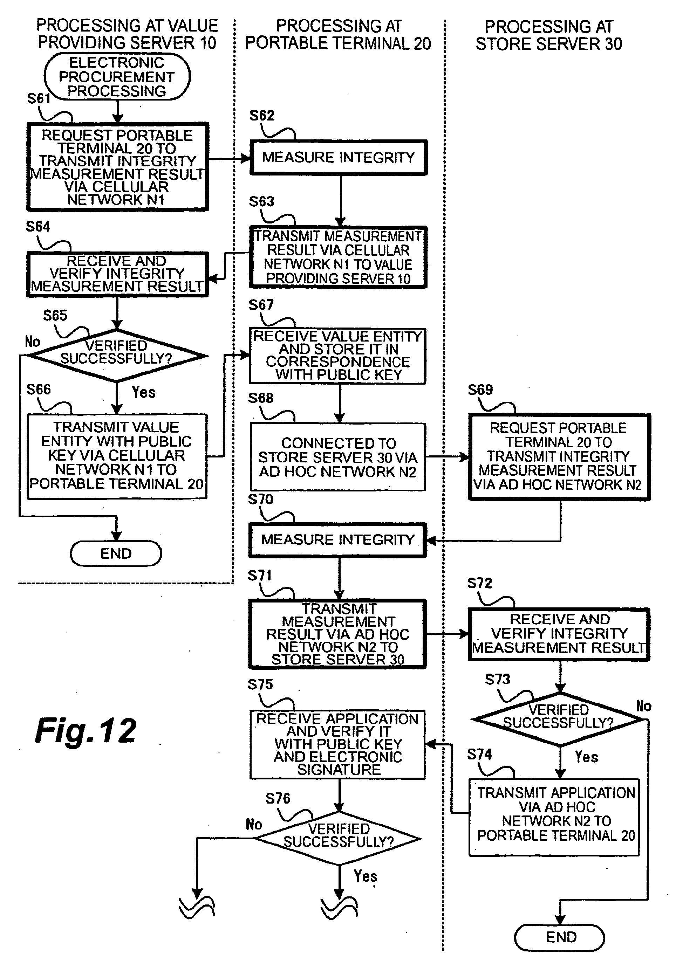

The electronic procurement processing executed by the electronic procurement supporting system in the fifth embodiment will be described below with reference to Fig. 12.
The electronic procurement processing in the present embodiment includes a plurality of steps common to the electronic procurement processing (cf. Fig. 4) detailed in the first embodiment. Specifically, the steps of S66-S68, and S74-S76 in Fig. 12 are equivalent to those of S1-S3, and S4-S6 shown in Fig. 12. Although the post-processes after S76 are not illustrated, the same processes as the processes at and after S7 in Fig. 4 are executed.

S61-S65 and S69-S73 (processes in heavy-line blocks in Fig. 12), which are specific steps in the present embodiment, will be described below.

At S61, in order for the value providing server 10 to check the reliability of portable terminal 20, the measurement result transmission requester 15 of value providing server 10 transmits a transmission request for transmission of integrity to the portable terminal 20. This transmission request is transmitted via the cellular network N1 with higher confidentiality and security.

At S62, according to the transmission request transmitted at S61, the integritymeasuring part 212 measures the integrity of portable terminal 20.
S63, the measurement result transmitter 213 transmits the integritymeasured at S62, via cellular network N1 to the value providing server 10.

At S64, the measurement result receiver 16 receives the integrity measurement result transmitted from the portable terminal 20 at S63, and the measurement result verifier 17 verifies the measurement result. When the verification results in successfully verifying the integrity (S65; Yes) , the flow goes to S66 to transmit the value entity 11a accompanied by the public key A1, via the cellular network N1 and base station B to the portable terminal 20.

When the verification at S64 results in failing to verify the integrity (S65; No), the sequential electronic procurement processing ends. Factors to cause the failure in the verification of integrity include, for example, a case in which the portable terminal 20 is unreliable because of infection with a virus or the like.

When the portable terminal 20 is connected to the store server 30 (S68), in order for the store server 30 to check the reliability of portable terminal 20, S69 is carried out to let the measurement result transmission requester 35 of store server 30 transmit an integrity transmission request to the portable terminal 20.

At S70, according to the transmission request transmitted at S 69, the integrity measuring part 212 measures the integrity of portable terminal 20.
At S71, the measurement result transmitter 213 transmits the integrity measured at S70, via the adhoc network N2 to the store server 30.

At S72, the measurement result receiver 36 receives the integrity measurement result transmitted from portable terminal 20 at S71 and the measurement result verifier 37 verifies the measurement result. When the verification results in successfully verifying the integrity (S73; Yes), the flow proceeds to S74 to transmit the application 31a in the application storage 31 via the ad hoc network N2 to the portable terminal 20. On the other hand, when the verification of integrity is unsuccessful (S73; No), the sequential electronic procurement processing ends.

In the electronic procurement supporting system 4 in the fifth embodiment, the value providing server 10 acquires the integrity measurement result of the portable terminal 20 being the receiver of the value entity, prior to the transmission of the value entity, and evaluates the reliability of portable terminal 20 on the basis of the measurement result. Then it transmits the value entity to only the portable terminal judged as reliable. Accordingly, it is feasible to avoid harms on the electronic procurement supporting system and degradation of reliability due to acquisition of the value entity by the portable terminal possibly infected with a virus or falsified with malice.

In the electronic procurement supporting system 4 in the fifth embodiment, the store server 30 acquires the integrity measurement result of the portable terminal 20 being the receiver of the application, prior to the transmission of the application, and evaluates the reliability of portable terminal 20 on the basis of the measurement result. Then it transmits the application to only the portable terminal judged as reliable. Through this operation, the integrity of portable terminal 20 is again verified immediately before the reception of the application, as well as immediately before the reception of the value entity. Accordingly, for example, in the case where there was no problem in integrity at the time of reception of the value entity at portable terminal 20 but the integrity was degraded after the reception, it is feasible to circumvent harms on the electronic procurement supporting system and degradation of reliability because of inappropriate behavior of portable terminal 20.

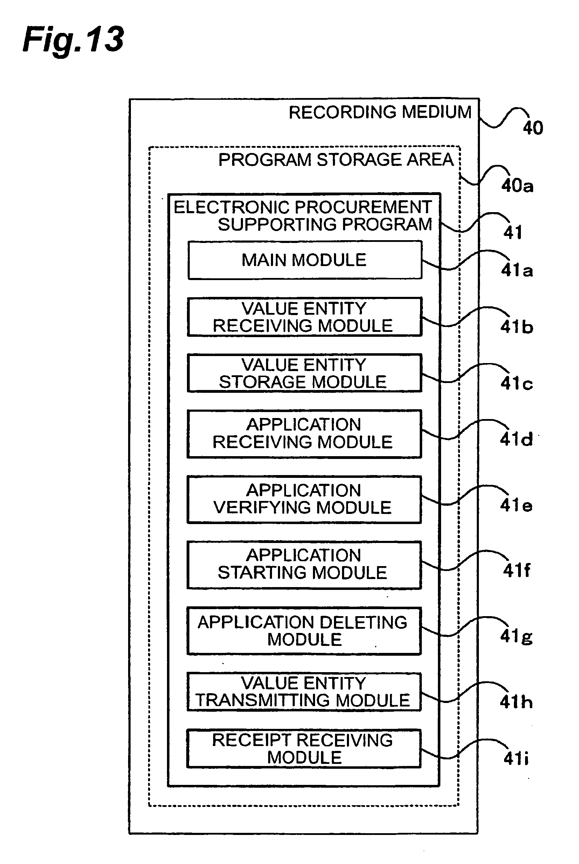

Lastly, the electronic procurement supporting program for letting the portable terminal 20 execute the sequential electronic procurement processing described above will be described. As shown in Fig. 13, the electronic procurement supporting program 41 is stored in program storage area 40a formed in recording medium 40.

The electronic procurement supporting program 41 is comprised of main module 41a for totally controlling the electronic procurement processing; value entity receiving module 41b for letting the portable terminal 20 execute a process of receiving a value entity transmitted from the outside; value entity storage module 41c for letting the portable terminal 20 execute aprocess of storing the received value entity into a storage means such as amemory; application receiving module 41d for letting the portable terminal 20 execute a process of receiving an application transmitted from the outside; application verifying module 41e for letting the portable terminal 20 execute a process of verifying the received application; application starting module 41f for letting the portable terminal 20 execute a process of starting an application successfully verified; application deleting module 41g for letting the portable terminal 20 execute a process of deleting an application failing in verification; value entity transmitting module 41h for letting the portable terminal 20 execute a process of transmitting the value entity to the sender of the application; and receipt receiving module 41i for letting the portable terminal 20 execute a process of receiving receipt data for a value entity, transmitted from the outside.

The functions implemented by executing the respective modules of value entity receiving module 41b, application receiving module 41d, application verifying module 41e, application starting module 41f, application deleting module 41g, value entity transmitting module 41h, and receipt receiving module 41i are similar to those of the value entity receiver 21, application receiver 23, application verifier 24, application starter 25, application deleter 26, value entity transmitter 27, and receipt receiver 28 of the portable terminal 20. Data stored through execution of the value entity storage module 41c is similar to the data stored in the value entity storage 22.

The electronic procurement supporting program 41 may be configured so that part or all thereof is transmitted through a transmission medium such as a communication line or the like and is received and recorded (including an installed case) by another device.

From the invention thus described, it will be obvious that the embodiments of the invention may be varied in many ways. Such variations are not to be regarded as a departure from the scope of the invention, and all such modifications as would be obvious to one skilled in the art are intended for inclusion within the scope of the following claims.

## Claims

1. A communication terminal (20) comprising:
acquiring means (21) for acquiring a value entity accompanied by a public key corresponding to a specific private key;
receiving means (23) for receiving an application electronically signed by the private key, through an ad hoc network;
verifying means (24) for verifying the application through the use of the public key; and
transferring means (27) for transferring the value entity through the use of the application when the verifying means (24) successfully verifies the application.

2. The communication terminal (20) according to Claim 1, wherein the verifying means (24) initiates the verification of the application in conjunction with an opportunity where the receiving means (23) receives the application,
the communication terminal (20) further comprising starting means (25) for starting the application in conjunction with an opportunity where the verifying means (24) successfully verifies the application.

3. The communication terminal (20) according to Claim 1, further comprising:
deleting means (26) for deleting the application in conjunction with an opportunity where a predetermined time has elapsed since a time when the receiving means (23) received the application.

4. The communication terminal (20) according to Claim 1, further comprising:
deleting means (26) for, where a communication with a sender of the application is disconnected after the reception of the application by the receiving means (23), deleting the application in conjunction with an opportunity where a predetermined time has elapsed since the disconnection of the communication.

5. An electronic procurement supporting method comprising:
an acquiring step (S2) wherein a communication terminal (20) makes acquiring means (21) acquire a value entity accompanied by a public key corresponding to a specific private key;
a receiving step (S5) wherein the communication terminal (20) makes receiving means (23) receive an application electronically signed by the private key,through an ad hoc network;
a verifying step (S6) wherein the communication terminal (20) makes verifying means (24) verify the application through the use of the public key; and
a transferring step (S9) wherein, when the verifying means (24) successfully verifies the application, the communication terminal (20) makes transferring means (27) transfer the value entity through the use of the application.

6. An electronic procurement supporting program (41) which can be executed by a communication terminal (20), the electronic procurement supporting program (41) letting the communication terminal (20) substantialize:
an acquiring function of acquiring a value entity accompanied by a public key corresponding to a specific private key;
a receiving function of receiving an application electronically signed by the private key, through an ad hoc network;
a verifying function of verifying the application through the use of the public key; and
a transferring function of transferring the value entity through the use of the application when the application is successfully verified by the verifying function.

## Patentansprüche

1. Kommunikations-Endgerät (20), aufweisend:
Akquirierungs-Mittel (21) zum Akquirieren einer Wert-Entität begleitet von einem öffentlichen Schlüssel korrespondierend zu einem bestimmten geheimen Schlüssel;
Empfangs-Mittel (23) zum Empfangen einer elektronisch durch den geheimen Schlüssel signierten Anwendung, durch ein Ad-Hoc-Netzwerk;
Verifizierungs-Mittel (24) zum Verifizieren der Anwendung durch die Verwendung des geheimen Schlüssels; und
Übertragungs-Mittel (27) zum Übertragen der Wert-Entität durch die Verwendung der Anwendung, wenn das Verifizierungs-Mittel (24) die Anwendung erfolgreich verifiziert.

2. Kommunikations-Endgerät (20) gemäß Anspruch 1, wobei das Verifizierungs-Mittel (24) die Verifikation der Anwendung initiiert in Verbindung mit einer Gelegenheit, wo das Empfangs-Mittel (23) die Anwendung empfängt,
das Kommunikations-Endgerät (20) ferner aufweisend Start-Mittel (25) zum Starten der Anwendung in Verbindung mit einer Gelegenheit, wo das Verifizierungs-Mittel (24) die Anwendung erfolgreich verifiziert.

3. Kommunikations-Endgerät (20) gemäß Anspruch 1, ferner aufweisend:
Löschungs-Mittel (26) zum Löschen der Anwendung in Verbindung mit einer Gelegenheit, wo eine vorgegebene Zeit abgelaufen ist seit einer Zeit, wenn das Empfangs-Mittel (23) die Anwendung empfing.

4. Kommunikations-Endgerät (20) gemäß Anspruch 1, ferner aufweisend:
Löschungs-Mittel (26) zum, wo eine Kommunikation mit einem Sender der Anwendung getrennt wird nach dem Empfang der Anwendung durch das Empfangs-Mittel (23), Löschen der Anwendung in Verbindung mit einer Gelegenheit, wo eine vorgegebene Zeit abgelaufen ist seit dem Trennen der Kommunikation.

5. Elektronische-Vermittlung-Unterstützungs-Verfahren, aufweisend:
einen Akquirierungs-Schritt (S2), in dem ein Kommunikations-Endgerät (20) Akquirierungs-Mittel (21) dazu bringt, eine Wert-Entität begleitet von einem öffentlichen Schlüssel korrespondierend zu einem bestimmten geheimen Schlüssel zu akquirieren;
einen Empfangs-Schritt (S5), in dem das Kommunikations-Endgerät (20) Empfangs-Mittel (23) dazu bringt, eine elektronisch durch den geheimen Schlüssel signierte Anwendung zu empfangen, durch ein Ad-Hoc-Netzwerk;
einen Verifizierungs-Schritt (S6), in dem das Kommunikations-Endgerät (20) Verifizierungs-Mittel (24) dazu bringt, die Anwendung durch die Verwendung des geheimen Schlüssels zu verifizieren; und
einen Übertragungs-Schritt (S9), in dem, wenn das Verifizierung-Mittel (24) die Anwendung erfolgreich verifiziert, das Kommunikations-Endgerät (20) Übertragungs-Mittel (27) dazu bringt, die Wert-Entität zu übertragen durch die Verwendung der Anwendung.

6. Elektronische-Vermittlung-Unterstützungs-Programm (41), welches ausgeführt werden kann durch ein Kommunikations-Endgerät (20), das elektronische Vermittlung-Unterstützungs-Programm (41) das Kommunikations-Endgerät (20) substantiieren lassend:
eine Akquirierungs-Funktion von Akquirieren einer Wert-Entität begleitet von einem öffentlichen Schlüssel korrespondierend zu einem bestimmten geheimen Schlüssel;
eine Empfangs-Funktion von Empfangen einer elektronisch durch den geheimen Schlüssel signierten Anwendung, durch ein Ad-Hoc-Netzwerk;
eine Verifizierungs-Funktion von Verifizieren der Anwendung durch die Verwendung des geheimen Schlüssels; und
eine Übertragungs-Funktion von Übertragen der Wert-Entität durch die Verwendung der Anwendung wenn die Anwendung erfolgreich verifiziert ist durch die Verifizierungs-Funktion.

## Revendications

1. Terminal de communication (20) comprenant :
des moyens d'acquisition (21) pour acquérir une entité de valeur accompagnée d'une clé publique correspondant à une clé privée spécifique ;
des moyens de réception (23) pour recevoir une application signée électroniquement par la clé privée, par l'intermédiaire d'un réseau ad hoc ;
des moyens de vérification (24) pour vérifier l'application par l'utilisation de la clé publique ; et
des moyens de transfert (27) pour transférer l'entité de valeur par l'utilisation de l'application lorsque les moyens de vérification (24) vérifient avec succès l'application.

2. Terminal de communication (20) selon la revendication 1, dans lequel les moyens de vérification (24) lancent la vérification de l'application conjointement avec une opportunité où les moyens de réception (23) reçoivent l'application,
le terminal de communication (20) comprend en outre des moyens de démarrage (25) pour démarrer l'application conjointement avec une opportunité où les moyens de vérification (24) vérifient avec succès l'application.

3. Terminal de communication (20) selon la revendication 1, comprenant en outre :
des moyens de suppression (26) pour supprimer l'application conjointement avec une opportunité où un temps prédéterminé s'est écoulé depuis un instant auquel les moyens de réception (23) ont reçu l'application.

4. Terminal de communication (20) selon la revendication 1, comprenant en outre:
des moyens de suppression (26) pour, lorsqu'une communication avec un expéditeur de l'application est déconnectée après la réception de l'application par les moyens de réception (23), supprimer l'application conjointement avec une opportunité où un temps prédéterminé s'est écoulé depuis la déconnexion de la communication.

5. Procédé de prise en charge d'achats électroniques comprenant :
une étape d'acquisition (S2) à laquelle un terminal de communication (20) amène des moyens d'acquisition (21) à acquérir une entité de valeur accompagnée d'une clé publique correspondant à une clé privée spécifique ;
une étape de réception (S5) à laquelle le terminal de communication (20) amène des moyens de réception (23) à recevoir une application signée électroniquement par la clé privée, par l'intermédiaire d'un réseau ad hoc ;
une étape de vérification (S6) à laquelle le terminal de communication (20) amène des moyens de vérification (24) à vérifier l'application par l'utilisation de la clé publique ; et
une étape de transfert (S9) à laquelle, lorsque les moyens de vérification (24) vérifient avec succès l'application, le terminal de communication (20) amène des moyens de transfert (27) à transférer l'entité de valeur par l'utilisation de l'application.

6. Programme de prise en charge d'achats électroniques (41) qui peut être exécuté par un terminal de communication (20), le programme de prise en charge d'achats électroniques (41) laissant le terminal de communication (20) mettre en oeuvre :
une fonction d'acquisition consistant à acquérir une entité de valeur accompagnée d'une clé publique correspondant à une clé privée spécifique ;
une fonction de réception consistant à recevoir une application signée électriquement par la clé privée, par l'intermédiaire d'un réseau ad hoc ;
une fonction de vérification consistant à vérifier l'application par l'utilisation de la clé publique ; et
une fonction de transfert consistant à transférer l'entité de valeur par l'utilisation de l'application lorsque l'application est vérifiée avec succès par la fonction de vérification.
